# EUROPEAN PATENT APPLICATION

(11) **EP 4 765 238 A1**
(43) Date of publication of application: **24.06.2026**
(21) Application number: 24880087.2
(22) Date of filing: 15.10.2024
(51) Int. Cl.: H01M 4/36, H01M 4/525, H01M 4/505, C01G 53/00, H01M 4/131, H01M 10/052, H01M 4/02

(54) **CATHODE ACTIVE MATERIAL, AND CATHODE AND LITHIUM SECONDARY BATTERY COMPRISING SAME**

(30) Priority: 19.10.2023 KR 20230140699; 14.10.2024 KR 20240139814
(71) Applicant: LG Energy Solution, Ltd., Seoul 07335 (KR)
(72) Inventor: OH, Su Yeon, Daejeon 34122 (KR); LHO, Eun Sol, Daejeon 34122 (KR); HWANG, Jin Tae, Daejeon 34122 (KR); KIM, Hyeong Il, Daejeon 34122 (KR); LEE, Seok Jin, Daejeon 34122 (KR)
(74) Representative: Hoffmann Eitle
(86) International application number: PCT/KR2024/015612
(87) International publication number: WO 2025/084750

(57) **Abstract**

The present disclosure relates to a positive electrode active material, a method of preparing the same, and a lithium secondary battery including the same. Specifically, the positive electrode active material of the present disclosure includes a lithium nickel-based oxide having a content of nickel among total metallic elements excluding lithium of 70 mol% or more; a first coating layer formed on the lithium nickel-based oxide; and a second coating layer formed on the first coating layer, wherein the first coating layer includes coating element M1 (the M1 is at least one selected from the group consisting of nickel (Ni), cobalt (Co), and aluminum (Al)), the second coating layer includes coating element M2 (the M2 is titanium (Ti)), and a content of titanium are included in the second coating layer, which is measured by X-ray photoelectron spectroscopy (XPS), may be in a range of 0.7 atomic% to 3.3 atomic% based on a total content of Ni, Co, lithium (Li), and oxygen (O) are included in the lithium nickel-based oxide which is measured by the XPS.

## Description

### TECHNICAL FIELD

### Cross-reference to Related Applications

This application claims priority from Korean Patent Application Nos. 10-2023-0140699, filed on October 19, 2023, and 10-2024-0139814, filed on October 14, 2024, the disclosures of which are incorporated by reference herein.

### Technical Field

The present disclosure relates to a positive electrode active material, and a positive electrode and a lithium secondary battery which include the same, and particularly, to a positive electrode active material in which high-temperature stability is improved by including a coating layer containing a specific concentration of thermally stable titanium dioxide (TiO₂), and a positive electrode and a lithium secondary battery in which high-temperature stability is improved by including the positive electrode active material.

### BACKGROUND ART

Demand for secondary batteries as an energy source has been significantly increased as technology development and demand with respect to mobile devices have increased. Among these secondary batteries, commercialization of lithium secondary batteries having high energy density, high voltage, long cycle life, and low self-discharging rate is expanding.

Lithium cobalt oxide (LiCoO₂), lithium nickel oxide (LiNiO₂), lithium manganese oxide (LiMnO₂ or LiMn₂O₄), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Accordingly, lithium composite transition metal oxides containing two or more types of transition metals have been developed to compensate for the problems of the lithium transition metal oxides containing nickel (Ni), cobalt (Co), or manganese (Mn) alone, and, among them, a lithium nickel cobalt manganese oxide containing Ni, Co, and Mn has been widely used in the field of electric vehicle batteries.

A conventional lithium nickel cobalt manganese oxide was generally in a form of a spherical secondary particle in which tens to hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, there is a problem in that active material degradation is increased.

Particularly, as lithium secondary batteries with high energy density are demanded, a nickel content in the positive electrode active material has tended to gradually increase. However, with respect to the positive electrode active material with a high nickel content, since a large amount of highly reactive Ni⁺⁴ ions are generated if charge and discharge are repeated, structural collapse of the positive electrode active material occurs, and, as a result, there is a problem in that degradation rate of the positive electrode active material is increased to degrade life characteristics and reduce battery safety.

Thus, there is a demand for the development of a positive electrode active material that may simultaneously achieve high capacity and high thermal stability.

### DISCLOSURE OF THE INVENTION

### TECHNICAL PROBLEM

An aspect of the present disclosure provides a positive electrode active material having excellent thermal stability.

Another aspect of the present disclosure provides a positive electrode including the positive electrode active material and a lithium secondary battery in which thermal stability is excellent by including the positive electrode.

### TECHNICAL SOLUTION

[1] The present disclosure provides a positive electrode active material including a lithium nickel-based oxide having a content of nickel among total metallic elements excluding lithium of 70 mol% or more; a first coating layer formed on the lithium nickel-based oxide; and a second coating layer formed on the first coating layer,
   wherein the first coating layer includes coating element M1 (the M1 is at least one selected from the group consisting of nickel (Ni), cobalt (Co), and aluminum (Al)),
   the second coating layer includes coating element M2 (the M2 is titanium (Ti)), and
   a content of titanium are included in the second coating layer, which is measured by X-ray photoelectron spectroscopy (XPS), is in a range of 0.7 atomic% to 3.3 atomic% based on a total content of Ni, Co, lithium (Li), and oxygen (O) included in the lithium nickel-based oxide which is measured by the XPS.
[2] The present disclosure provides the positive electrode active material of [1] above, wherein the lithium nickel-based oxide particle is represented by [Formula 1]:

   [Formula 1] LiₐNi_{b}Co_{c}M'_{d}M"ₑO₂

   In [Formula 1],
   M' is manganese (Mn), aluminum (Al), or a combination thereof,
   M" is at least one selected from the group consisting of Al, zirconium (Zr), tungsten (W), titanium (Ti), magnesium (Mg), calcium (Ca), and strontium (Sr), and 0.8≤a≤1.2, 0.7≤b<1.0, 0<c<0.3, 0<d<0.3, and 0≤e≤0.2.
[3] The present disclosure provides the positive electrode active material of [1] or [2] above, wherein the lithium nickel-based oxide particle is in a form of a single particle composed of one primary particle or in a form of a pseudo-single particle which is an aggregate of 30 or less primary particles.
[4] The present disclosure provides the positive electrode active material of at least one of [1] to [3] above, wherein an average particle diameter (D₅₀) of the lithium nickel-based oxide particle is in a range of 1.0 µm to 8.0 µm.
[5] The present disclosure provides the positive electrode active material of at least one of [1] to [4] above, wherein the first coating layer is continuously coated on a surface of the lithium nickel-based oxide particle.
[6] The present disclosure provides the positive electrode active material of at least one of [1] to [5] above, wherein the first coating layer includes Al₂O₃ and Co₃O₄.
[7] The present disclosure provides the positive electrode active material of at least one of [1] to [6] above, wherein the second coating layer is discontinuously distributed on a surface of the first coating layer.
[8] The present disclosure provides the positive electrode active material of at least one of [1] to [7] above, wherein the second coating layer includes titanium dioxide (TiO₂).
[9] The present disclosure provides the positive electrode active material of at least one of [1] to [8] above, wherein an average particle diameter (D₅₀) of the titanium dioxide (TiO₂) is in a range of 20 nm to 150 nm.
[10] The present disclosure provides the positive electrode active material of at least one of [1] to [9] above, wherein the titanium dioxide (TiO₂) is are included in an amount of 1,000 ppm to 2,000 ppm based on a total amount of the positive electrode active material.
[11] The present disclosure provides the positive electrode active material of at least one of [1] to [10] above, wherein the first coating layer and the second coating layer are included in an amount of 2.3 wt% to 2.5 wt% based on a total amount of the positive electrode active material.
[12] The present disclosure provides the positive electrode active material of at least one of [1] to [11] above, wherein the first coating layer and the second coating layer are included in a weight ratio of 1:0.04 to 1:0.1.
[13] The present disclosure provides the positive electrode active material of at least one of [1] to [12] above, wherein the content of the titanium are included in the second coating layer, which is measured by the XPS, is in a range of 0.7 atomic% to 3.0 atomic% based on the total content of the Ni, Co, Li, and oxygen (O) included in the lithium nickel-based oxide which is measured by the XPS.
[14] The present disclosure provides the positive electrode active material of at least one of [1] to [13] above, wherein the positive electrode active material has a maximum heat flow, which is measured by differential scanning calorimetry (DSC), of 11 W/g or less.
[15] The present disclosure provides a method of preparing the positive electrode active material of at least one of [1] to [17] above which includes: preparing a transition metal precursor containing nickel (Ni), cobalt (Co), and manganese (Mn) and having a content of the nickel among total metallic elements of 70 mol% or more;
   mixing the transition metal precursor with a lithium-containing raw material, and performing primary sintering to form a lithium nickel-based oxide;
   mixing the lithium nickel-based oxide with an aluminum precursor and a cobalt precursor, and performing secondary sintering to form a first coating layer containing coating element M1 (the M1 is at least one selected from Ni, Co, and aluminum (Al)) on the lithium nickel-based oxide; and
   mixing the lithium nickel-based oxide having the first coating layer formed thereon with a titanium precursor, and performing tertiary sintering to form a second coating layer containing coating element M2 (the M2 is titanium (Ti)) on a surface of the first coating layer.
[16] The present disclosure provides the method of [15] above, wherein the transition metal precursor is represented by [Formula 2]:

   [Formula 2] NiₓCo_{y}Mn_{z}M³_{q}(OH)₂

   In [Formula 2],
   M³ is at least one selected from the group consisting of Mn, Al, Zr, W, Ti, Mg, Ca, and Sr, and 0.7≤x≤1.0, 0<y≤0.3, 0<z<0.3, and 0≤q≤0.2.
[17] The present disclosure provides the method of [15] or [16] above, wherein the primary sintering is performed at a temperature of 800°C to 890°C.
[18] The present disclosure provides the method of at least one of [15] to [17] above, wherein the secondary sintering is performed at a temperature of 600°C to 790°C.
[19] The present disclosure provides the method of at least one of [15] to [18] above, wherein the tertiary sintering is performed at a temperature of 600°C to 700°C.
[20] The present disclosure provides the method of at least one of [15] to [19] above, wherein a mixing molar ratio of the lithium nickel-based oxide having the first coating layer formed thereon to the titanium precursor is in a range of 100:0.1 to 100:0.3.
[21] The present disclosure provides a positive electrode for a lithium secondary battery which includes the positive electrode active material of at least one of [1] to [14] above.
[22] The present disclosure provides a lithium secondary battery including the positive electrode for a lithium secondary battery of [21] above.

### ADVANTAGEOUS EFFECTS

A positive electrode active material of the present disclosure may secure excellent thermal stability and surface durability by including a coating layer containing titanium dioxide (TiO₂) with high thermal stability at a specific concentration on a surface of a lithium nickel-based oxide particle in a form of a single particle. Thus, if the positive electrode active material of the present disclosure is used, a lithium secondary battery with improved high-temperature stability and reduced initial resistance may be achieved.

### BRIEF DESCRIPTION OF THE DRAWINGS

The following drawings attached to the specification illustrate preferred examples of the present disclosure by example, and serve to enable technical concepts of the present disclosure to be further understood together with detailed description of the invention given below, and therefore the present disclosure should not be interpreted only with matters in such drawings.
FIG. 1 and FIG. 2 are scanning electron microscope (SEM) images of a positive electrode active material including a second coating layer which is prepared in Example 1 of the present disclosure.
FIG. 3 is a graph illustrating XPS (X-ray photoelectron spectroscopy) results for the second coating layer of the positive electrode active material prepared in Example 1 of the present disclosure.
FIG. 4 is a graph illustrating XPS results for a second coating layer of a positive electrode active material prepared according to Example 2 of the present disclosure.
FIG. 5 is a graph illustrating XPS results for a second coating layer of a positive electrode active material prepared according to Example 3 of the present disclosure.
FIG. 6 is a graph comparing differential scanning calorimetry (DSC) results of lithium secondary batteries according to Experimental Example 2.
FIG. 7 is a graph illustrating results of initial resistance evaluation of lithium secondary batteries according to Experimental Example 3.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The term 'on' in the present specification means not only a case in which one component is formed directly on an upper surface of another component, but also includes a case in which intervening components may also be present.

In the present specification, "%" denotes wt% unless explicitly stated otherwise.

In the present specification, a "single particle" is a particle composed of one nodule. In the present disclosure, a "pseudo-single particle" means a composite particle formed of 30 or less nodules.

The "nodule" means a particle unit body constituting the single particle and the pseudo-single particle, wherein the nodule may be a single crystal without a crystalline grain boundary, or may be a polycrystal in which grain boundaries do not exist in appearance when observed by using a scanning electron microscope (SEM) or electron backscatter diffraction (EBSD) with a field of view of 5,000 times to 20,000 times. An average particle diameter of the nodule means an arithmetic mean value calculated after measuring particle diameters of the nodules observed by the SEM or EBSD.

In the present specification, "Dₘᵢₙ", "D₅₀", and "Dₘₐₓ" are particle size values of volume cumulative distribution of positive electrode active material powder which are measured using a laser diffraction method. Specifically, the Dₘᵢₙ is a minimum particle size appearing in the volume cumulative distribution, the D₅₀ is a particle size when a volume accumulation is 50%, and the Dₘₐₓ is a maximum particle size appearing in the volume accumulation distribution. The particle size values of the volume cumulative distribution, for example, may be measured by dispersing the positive electrode active material powder in a dispersion medium, then introducing the dispersion medium into a commercial laser diffraction particle size measurement instrument (e.g., Microtrac MT 3000), and irradiating the dispersion medium with ultrasonic waves of about 28 kHz at an output of 60 W to obtain a volume cumulative particle size distribution graph.

Also, in the present disclosure, a specific surface area of the positive electrode active material is measured by a Brunauer-Emmett-Teller (BET) method, wherein, specifically, the specific surface area may be calculated from a nitrogen gas adsorption amount at a liquid nitrogen temperature (77K) using BELSORP-mino II by Bell Japan Inc.

Also, X-ray photoelectron spectrum (hereinafter, referred to as "XPS") in this specification is a method of analyzing constituent elements of a sample and their electronic states by measuring energy of photoelectrons generated by irradiating the sample, particularly, a surface of the sample with X-rays. Particularly, since the XPS may analyze a region from the surface of the sample to a depth of about 2 nm to 8 nm (usually about 5 nm), it may quantitatively and qualitatively analyze concentrations of elements in about half of a surface portion. In the present disclosure, measurements were made using XPS (manufactured by Rikaku, X-ray source: Cu-Kα (1486.6 eV); accelerating voltage: 10 kV, 300 W, energy resolution: about 1.0 eV, minimum analysis area: 10 micro, sputter rate: 0.1 nm/min).

Hereinafter, the present disclosure will be described in more detail to allow for a clearer understanding of the present disclosure.

A positive electrode active material according to the present disclosure, and a positive electrode and a lithium secondary battery, which include the positive electrode active material, include at least one of configurations described below, and may include any combination between technically possible configurations among the configurations below.

### [Positive Electrode Active Material]

In an embodiment, the present disclosure provides a positive electrode active material including
a lithium nickel-based oxide having a content of nickel among total metallic elements excluding lithium of 70 mol% or more; a first coating layer formed on the lithium nickel-based oxide; and a second coating layer formed on the first coating layer,
wherein the first coating layer includes coating element M1 (the M1 is at least one selected from the group consisting of nickel (Ni), cobalt (Co), and aluminum (Al)),
the second coating layer includes coating element M2 (the M2 is titanium (Ti)), and
a content of titanium are included in the second coating layer, which is measured by X-ray photoelectron spectroscopy (XPS), is in a range of 0.7 atomic% to 3.3 atomic% based on a total content of Ni, Co, lithium (Li), and oxygen (O) are included in the lithium nickel-based oxide which is measured by the XPS.

Conventionally, a positive electrode active material in a form of a secondary particle, in which primary particles were aggregated, has a problem that particle breakage, in which the primary particles fall off in a rolling process for preparation of a positive electrode, is likely to occur and the positive electrode active material is vulnerable to structural changes and occurrence of cracks in the particles during charge and discharge. In contrast, since a positive electrode active material in a form of a single particle composed of a primary particle or a pseudo-single particle which is an aggregate of 30 or less primary particles has higher particle strength than the conventional positive electrode active material in the form of a secondary particle in which tens to hundreds of primary particles are aggregated, the particle breakage during rolling hardly occurs, and also, since the number of primary particles constituting the particle is small, changes due to volume expansion and contraction of the primary particles during charge and discharge are small, and thus, there is an advantage in that the occurrence of cracks in the particles is significantly reduced.

Accordingly, in order to provide a positive electrode active material with excellent thermal stability, the included inventors aim to provide a positive electrode active material capable of securing excellent thermal stability and surface durability by suppressing oxygen desorption through strengthening of bonding with oxygen on a surface of the positive electrode active material by using a single-particle lithium nickel-based oxide particle having a specific particle diameter range, as a core portion, and simultaneously forming a coating layer containing titanium dioxide (TiO₂) with excellent thermal stability at a specific concentration on a surface of the lithium nickel-based oxide particle.

Specifically, the positive electrode active material according to the present disclosure may include a lithium nickel-based oxide particle having a content of nickel among total metallic elements excluding lithium of 70 mol% or more, preferably 80 mol% to less than 100 mol%, and more preferably 85 mol% to less than 100 mol%.

The lithium nickel-based oxide particle having a high Ni content as described above may include a compound represented by [Formula 1] below.

[Formula 1] LiₐNi_{b}Co_{c}M'_{d}M"ₑO₂

In [Formula 1],
M' is manganese (Mn), aluminum (Al), or a combination thereof,
M" is at least one selected from the group consisting of Al, zirconium (Zr), tungsten (W), titanium (Ti), magnesium (Mg), calcium (Ca), and strontium (Sr), and 0.8≤a≤1.2, 0.7≤b<1.0, 0<c<0.3, 0<d<0.3, and 0≤e≤0.2.

In Formula 1, a represents a molar ratio of lithium in the lithium nickel-based oxide, wherein a may satisfy 0.8≤a≤1.2, may particularly satisfy 0.85≤a≤1.15, and may more particularly satisfy 0.9≤a≤1.10. When the molar ratio of the lithium in the lithium nickel-based oxide satisfies the above range, a crystal structure of the lithium nickel-based oxide may be stably formed.

b represents a molar ratio of nickel among total metals excluding lithium in the lithium nickel-based oxide, wherein b may satisfy 0.7≤b<1.0, may particularly satisfy 0.8≤b≤0.95, and may more particularly satisfy 0.85≤b≤0.95. When the molar ratio of the nickel in the lithium nickel-based oxide satisfies the above range, high energy density may be exhibited to achieve high capacity.

c represents a molar ratio of cobalt among the total metals excluding lithium in the lithium nickel-based oxide, wherein c may satisfy 0<c<0.3, may preferably satisfy 0.001<c<0.20, may particularly satisfy 0.01<c≤0.20, and may more particularly satisfy 0.01≤c<0.15. When the molar ratio of the cobalt in the lithium nickel-based oxide satisfies the above range, good resistance characteristics and output characteristics may be achieved.

d represents a molar ratio of element M¹ among the total metals excluding lithium in the lithium nickel-based oxide, wherein d may satisfy 0<d<0.3, may preferably satisfy 0.001<d<0.25, may more preferably satisfy 0.01≤d<0.20, may more preferably satisfy 0.01≤d<0.20, and may even more particularly 0.01≤d<0.15. When the molar ratio of the element M¹ in the lithium nickel-based oxide satisfies the above range, structural stability of the positive electrode active material is excellent.

e represents a molar ratio of element M² among the total metals excluding lithium in the lithium nickel-based oxide, wherein e may satisfy 0≤e≤0.2, may particularly satisfy 0≤e≤0.1, and may preferably satisfy 0≤e≤0.05.

Specifically, in order to achieve a high-capacity battery, the lithium nickel-based oxide particle may include Li(Ni_{0.8}Co_{0.1}Mn_{0.1})O₂, Li(Ni_{0.8}Co_{0.15}Al_{0.05})O₂, Li(Ni_{0.92}Co_{0.06}Mn_{0.02})O₂, Li(Ni_{0.95}Co_{0.03}Mn_{0.02})O₂, Li(Ni_{0.86}Co_{0.05}Mn_{0.07}Al_{0.02})O₂, or Li(Ni_{0.90}Co_{0.05}Mn_{0.05})O₂, and may preferably be Li(Ni_{0.92}Co_{0.06}Mn_{0.02})O₂ or Li(Ni_{0.95}Co_{0.03}Mn_{0.02})O₂.

The lithium nickel-based oxide of the present disclosure may be in the form of a single particle composed of one primary particle or in the form of a pseudo-single particle which is an aggregate of 30 or less primary particles.

An average particle diameter (D₅₀) of the lithium nickel-based oxide may be 1.0 µm or more.

That is, the present disclosure may suppress a side reaction by preventing particle crushing or cracking and may achieve excellent fast charging characteristics due to easier lithium ion conduction than polycrystals by using the lithium nickel-based oxide in the form of a single particle with excellent structural stability and having an average particle diameter (D₅₀) of 1.0 µm or more.

Specifically, the average particle diameter (D₅₀) of the lithium nickel-based oxide of the present disclosure may be 1.0 µm or more, particularly 1.0 µm to 8.0 µm, and more particularly 4.0 µm to 8.0 µm.

Also, Dₘᵢₙ of the lithium nickel-based oxide of the present disclosure may be 0.5 µm or more, for example, 0.5 µm to 3.0 µm, and may specifically be in a range of 1.0 µm to 3.0 µm.

As described above, since a specific surface area of the positive electrode active material is reduced due to a decrease in amount of fine particles as the average particle diameter (D₅₀) and the Dₘᵢₙ of the lithium nickel-based oxide of the present disclosure satisfy the above ranges, a contact interface with an electrolyte solution is reduced, and, as a result, the side reaction may be reduced to improve thermal stability. Thus, excellent thermal stability, a reduction in gas generation, and low initial resistance characteristics may be achieved when the positive electrode active material is used in a large cylindrical type battery.

Also, Dₘₐₓ of the lithium nickel-based oxide according to the present disclosure may be in a range of 12 µm to 20 µm, preferably 12 µm to 16 µm, and more preferably 12 µm to 15 µm. When the Dₘₐₓ of the lithium nickel-based oxide satisfies the above range, electrode density may be improved to prevent a decrease in energy density, and, since lithium mobility may be improved by preventing an increase in lithium movement path in the particle, an increase in resistance may be suppressed. Thus, excellent resistance characteristics and capacity characteristics may be secured.

Also, the lithium nickel-based oxide of the present disclosure may have a Brunauer-Emmett-Teller (BET) specific surface area of 2.0 m²/g to 6.0 m²/g, preferably, 2.2 m²/g to 4.0 m²/g.

In a case in which the BET surface area of the lithium nickel-based oxide satisfies the above range, reactivity with lithium increases during sintering, and accordingly, since cation mixing of the synthesized single-particle type positive electrode active material decreases and a degree of completeness of crystal structure of the positive electrode active material increases, a positive electrode active material with excellent capacity characteristics and structural stability may be prepared.

The positive electrode active material of the present disclosure may further include at least one coating layer on the surface of the lithium nickel-based oxide.

Specifically, since the positive electrode active material of the present disclosure includes a first coating layer containing the coating element M1 (the M1 is at least one selected from Ni, Co, and Al) on the lithium nickel-based oxide, the structural stability and particle strength of the active material may be improved and an effect of improving high-temperature life characteristics and resistance increase rate may be obtained.

Specifically, the first coating layer may be in a form of a film which is continuously coated on the surface of the lithium nickel-based oxide with a uniform thickness, or may be distributed on a portion of the surface of the lithium nickel-based oxide. Preferably, the first coating layer may be formed in a form in which it is continuously coated on the lithium nickel-based oxide.

The first coating layer may include Al(OH)₃, Al₂O₃, or Co₃O₄, and may specifically include Al₂O₃ and Co₃O₄.

Also, since the positive electrode active material of the present disclosure includes a second coating layer containing the coating element M2 (the M2 is Ti) with excellent thermal stability on a surface of the first coating layer, the oxygen desorption may be suppressed through the strengthening of bonding with oxygen on the surface of the positive electrode active material, and, as a result, excellent thermal stability and surface durability may be secured.

That is, in a case in which the conventional positive electrode active material is exposed to high temperatures, since bonds are broken while oxygen included in a surface portion and oxygen in a transition metal layer with a layered structure are continuously released, a structural change of the positive electrode active material into a spinel or rock-salt structure may occur. However, in the present disclosure, since the oxygen desorption may be suppressed due to the strengthening of bonding with oxygen by forming the second coating layer containing titanium, which has higher binding energy with oxygen than a transition metal element such as nickel (Ni), on the surface of the positive electrode active material and, as a result, structural collapse of the positive electrode may be suppressed, the thermal stability may be secured. Furthermore, since the surface durability may be enhanced to prevent a direct contact between the electrolyte solution and the lithium nickel-based oxide particle, occurrence of a surface side reaction may be prevented.

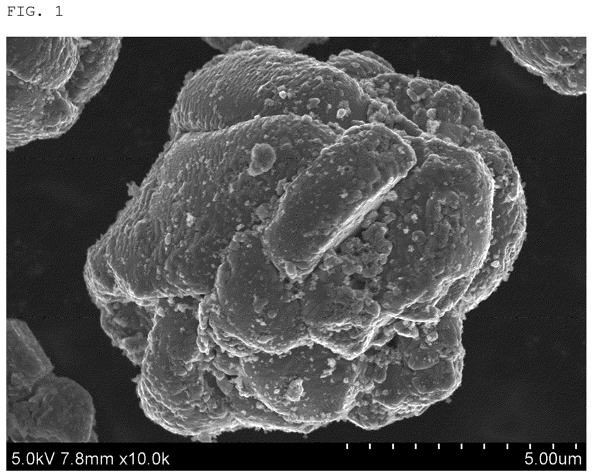

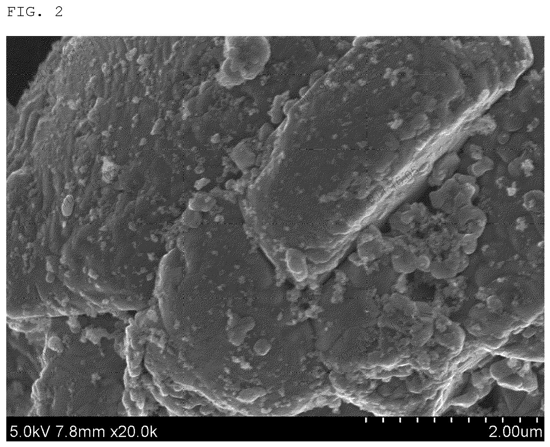

The second coating layer is discontinuously distributed on the first coating layer, and may include titanium dioxide (TiO₂) in a particle form (see FIGS. 1 and 2).

An average particle diameter (D₅₀) of the titanium dioxide (TiO₂) may be in a range of 20 nm to 150 nm, specifically 30 nm to 120 nm, and preferably 30 nm to 100 nm.

In a case in which the average particle diameter (D₅₀) of the titanium dioxide (TiO₂) satisfies the above range, since a coating layer having appropriate thickness and distribution may be formed, an effect of enhancing the surface durability and thermal stability of the positive electrode active material may be obtained.

Also, the titanium dioxide (TiO₂) may be included in an amount of 1,000 ppm to 2,000 ppm, or may be included in an amount of 1,500 ppm to 2,000 ppm based on a total amount of the positive electrode active material.

In a case in which the titanium dioxide (TiO₂) is are included in an amount of 1,000 ppm or more, a uniform distribution of the second coating layer may be formed to secure the thermal stability and surface durability, and, in a case in which the titanium dioxide (TiO₂) is are included in an amount of 2,000 ppm or less, an increase in resistance and a reduction in capacity, which are caused by the formation of an excessive amount of the coating layer, may be prevented.

The positive electrode active material of the present disclosure may have a concentration gradient in which a titanium fraction is sequentially decreased from an outermost surface toward the core portion, that is, toward an interface of the surface of the first coating layer. Specifically, a titanium concentration at the interface between the first coating layer and the second coating layer may be reduced by 40% or more, specifically, 50% or more, relative to a titanium concentration at the outermost surface of the positive electrode active material including the second coating layer. Since the surface durability of the positive electrode active material is enhanced by the concentration gradient and an internal crystal structure is stabilized, the thermal stability may be further improved.

The positive electrode active material of the present disclosure may have a content of titanium (Ti) are included in the second coating layer, which is measured by XPS, of 0.7 atomic% to 3.3 atomic%, particularly 0.7 atomic% to 3.0 atomic%, and more particularly 1.0 atomic% to 2.0 atomic% based on a total content of Ni, Co, Li, and oxygen (O) are included in the lithium nickel-based oxide particle which is measured by the X-ray photoelectron spectroscopy.

In the present disclosure, since the Ti-containing coating layer with high thermal stability is formed on the surface of the single-particle lithium nickel-based oxide particle, but the titanium (Ti) content satisfies the above range, high-temperature storage characteristics of the positive electrode active material may be further improved. That is, in a case in which the titanium (Ti) content is 0.7 atomic% or more, excellent surface durability may be secured, and, in a case in which the titanium (Ti) content is 3.3 atomic% or less, the increase in the initial resistance and the reduction in the capacity of the positive electrode active material due to a somewhat excessive amount of titanium (Ti) may be prevented.

Also, in the positive electrode active material of the present disclosure, the first coating layer and the second coating layer may be included in an amount of 2.3 wt% to 2.5 wt% based on the total amount of the positive electrode active material, and may specifically be included in an amount of 2.35 wt% to 2.5 wt%.

In a case in which the total amount of the first coating layer and the second coating layer satisfies the above range, high thermal safety of the positive electrode active material may be secured, and the effect of improving the high-temperature life characteristics and resistance increase rate may be obtained.

Furthermore, the first coating layer and the second coating layer may be included in a weight ratio of 1:0.04 to 1:0.1, and may specifically be included in a weight ratio of 1:0.04 to 1:0.09.

In a case in which the ratio of the first coating layer to the second coating layer satisfies the above range, high thermal safety of the positive electrode active material may be secured, and the effect of improving the high-temperature life characteristics and resistance increase rate may be obtained.

That is, in a case in which the weight ratio of the second coating layer to the first coating layer is 0.04 or more, the second coating layer may be discontinuously distributed on the surface of the first coating layer to secure the thermal stability, and, in a case in which the weight ratio of the second coating layer to the first coating layer is 0.1 or less, an effect of increasing the initial resistance and reducing the capacity due to remaining of unreacted Ti may be prevented.

An average particle diameter (D₅₀) of the positive electrode active material of the present disclosure including the first and second coating layers may be in a range of 5.0 µm to 7.0 µm, and may specifically be in a range of 5.0 µm to 6.5 µm.

Also, a BET specific surface area of the positive electrode active material of the present disclosure including the first and second coating layers may be in a range of 0.3 m²/g to 0.5 m²/g, preferably, 0.35 m²/g to 0.50 m²/g.

If the average particle diameter (D₅₀) and the BET specific surface area of the positive electrode active material of the present disclosure satisfy the above ranges, the contact interface with the electrolyte solution is reduced as the specific surface area of the positive electrode active material decreases, and, as a result, the side reaction may be reduced to improve the thermal stability. Thus, a lithium secondary battery with excellent thermal stability, reduced gas generation, and improved capacity characteristics may be achieved.

When heat flow of the positive electrode active material of the present disclosure is measured by differential scanning calorimetry (DSC), a maximum heat flow peak appears in a temperature range of 220°C to 235°C, and the heat flow measured by the differential scanning calorimetry (DSC) may be 11 W/g or less.

As described above, since the positive electrode active material of the present disclosure may secure excellent thermal stability by reducing the heat flow, which is identified by the heat flow peak, to 11 W/g or less, risk of explosion may be reduced even in a case in which internal temperature of the battery is increased due to overcharge or the like. In contrast, since most positive electrode active materials, which do not include the coating layer having the composition as in the present disclosure, have a heat flow, which is measured by differential scanning calorimetry (DSC), of greater than 11 W/g, an explosion may occur while heat flow may rapidly increase when the internal temperature of the battery is increased due to overcharge or the like.

As described above, the lithium nickel-based oxide in the form of a single particle, which is used in the core portion of the positive electrode active material of the present disclosure, may achieve a high-density improvement because it is prepared by sintering at a higher temperature than a typical polycrystalline lithium nickel-based oxide. However, the lithium nickel-based oxide in the form of a single particle has a disadvantage of low thermal stability due to the composition having a high Ni content, but, in the present disclosure, since the first coating layer containing Al and Co is formed on the lithium nickel-based oxide particle and the second coating layer containing a highly thermally stable heterogeneous element whose binding energy with oxygen is about 0.6 eV higher than that of Ni³⁺, i.e., Ti, is formed such that it is discontinuously distributed on the first coating layer, the oxygen desorption from the positive electrode active material may be suppressed to improve the thermal safety and the side reaction with the electrolyte may be suppressed to improve cycle characteristics and high-rate capability at the same time.

### [Method of Preparing Positive Electrode Active Material]

The present disclosure provides a method of preparing a positive electrode active material which includes the steps of:
preparing a transition metal precursor containing nickel (Ni), cobalt (Co), and manganese (Mn) and having a content of the nickel among total metallic elements of 70 mol% or more;
mixing the transition metal precursor with a lithium-containing raw material, and performing primary sintering to form a lithium nickel-based oxide;
mixing the lithium nickel-based oxide with an aluminum precursor and a cobalt precursor, and performing secondary sintering to form a first coating layer containing coating element M1 (the M1 is at least one selected from Ni, Co, and Al) on the lithium nickel-based oxide; and
mixing the lithium nickel-based oxide having the first coating layer formed thereon with a titanium precursor, and performing tertiary sintering to form a second coating layer containing coating element M2 (the M2 is Ti) on a surface of the first coating layer.

Hereinafter, each step of the method of preparing a positive electrode active material will be described in more detail.

### (A) Preparing Transition Metal Precursor

The method of preparing a positive electrode active material of the present disclosure may include preparing a transition metal precursor containing nickel (Ni), cobalt (Co), and manganese (Mn) and having a content of the nickel (Ni) in a total metal content of 70 mol% or more (step (A)).

The transition metal precursor may be represented by a compound represented by [Formula 2] below.

[Formula 2] NiₓCo_{y}Mn_{z}M³_{q}(OH)₂

In [Formula 2],
M³ may be at least one selected from the group consisting of Mn, Al, Zr, W, Ti, Mg, Ca, and Sr, and 0.7≤x≤1.0, 0<y≤0.3, 0<z<0.3, and 0≤q≤0.2.

### (B) Preparing Lithium Nickel-based Oxide Particles

Also, the method of preparing a positive electrode active material of the present disclosure may prepare a lithium nickel-based oxide in a form of a single particle composed of one primary particle or a pseudo-single particle which is an aggregate of 30 or less primary particles by mixing the transition metal precursor prepared in step (A) with a lithium-containing raw material and performing primary sintering (step (B)).

A mixing molar ratio of total transition metals contained in the transition metal precursor to lithium contained in the lithium-containing raw material may be in a range of 1:1.01 to 1:1.03, specifically, 1:1.01 to 1:1.02.

If the lithium-containing raw material is mixed within the above range, since the reduction in the capacity of the positive electrode active material may be prevented and a large amount of unreacted Li may remain as a byproduct, the reduction in the capacity and separation of the positive electrode active material particles after sintering (causing a positive electrode active material coalescence phenomenon) may be prevented.

The lithium-containing raw material may include at least one selected from lithium hydroxide hydrate, lithium carbonate, and lithium hydroxide, specifically, may be lithium hydroxide hydrate, and more specifically, may be LiOH·H₂O.

In a case in which the lithium hydroxide hydrate is used as the lithium-containing raw material, reactivity between the lithium-containing raw material and the precursor having a high atomic fraction of nickel among the metallic elements in the precursor may be improved.

The primary sintering may be performed at a temperature of 800°C to 890°C, and may specifically be performed at a temperature of 800°C to 850°C. In a case in which the primary sintering is performed within the above temperature range, lithium nickel-based oxide particles having a single particle form and a basic layered structure may be prepared.

The primary sintering may be performed in an oxygen atmosphere. For example, the primary sintering may be performed in an oxygen atmosphere containing 90 vol% or more, specifically, 95 vol% or more of oxygen. In this case, a primary sintered product having a structurally stable phase may be formed.

The primary sintering may be performed for 11 hours to 15 hours. The sintering may specifically be performed for 11 hours to 13 hours, more specifically, 12 hours. In a case in which the primary sintering time is within the above range, the sintering may be performed well without deviation for each sintering position, i.e., the sintering may be performed uniformly.

A BET specific surface area of the lithium nickel-based oxide obtained by the primary sintering may be in a range of 2.0 m²/g to 6.0 m²/g, preferably, 2.2 m²/g to 4.0 m²/g.

Also, the lithium nickel-based oxide obtained by the primary sintering may be a single particle having an average particle diameter (D₅₀) of 1.0 µm or more. Specifically, the average particle diameter (D₅₀) of the lithium nickel-based oxide may be in a range of 1.0 µm to 8.0 µm, and may more specifically be in a range of 4.0 µm to 8.0 µm.

Furthermore, the Dₘᵢₙ of the lithium nickel-based oxide according to the present disclosure may be 0.5 µm or more, and for example, may be controlled to be in a range of 0.5 µm to 3.0 µm, specifically, 1.0 µm to 3.0 µm.

As described above, in the present disclosure, as the amount of the fine particles is reduced by increasing the average particle diameter (D₅₀) and the Dₘᵢₙ of the lithium nickel-based oxide, the specific surface area of the positive electrode active material may be reduced to increase the energy density and improve the thermal stability. Thus, when the positive electrode active material is used in a large cylindrical type battery, excellent thermal stability, reduced gas generation, and low initial resistance characteristics may be achieved.

The Dₘₐₓ of the lithium nickel-based oxide according to the present disclosure may be in a range of 12 µm to 20 µm, preferably 12 µm to 16 µm, and more preferably 12 µm to 15 µm. If the Dₘₐₓ of the lithium nickel-based oxide satisfies the above range, the electrode density may be improved to prevent the decrease in energy density, and since the lithium mobility may be improved by preventing the increase in lithium movement path in the particle, the increase in resistance may be suppressed. Thus, excellent resistance characteristics and capacity characteristics may be secured.

### (C) Forming First Coating Layer on the Surface of the Nickel-based Oxide Particle

Furthermore, the method of preparing a positive electrode active material of the present disclosure may include the step of mixing the lithium nickel-based oxide particles, which are the primary sintered product prepared in step (B), with an aluminum precursor and a cobalt precursor, and performing secondary sintering to form a first coating layer containing coating element M1 (the M1 is at least one selected from the group consisting of Ni, Co, and Al) on the lithium nickel-based oxide particles (step (C)).

Since the surface durability is enhanced as the coating layer including an aluminum-rich Li-Al-Co-O solid solution, a Li-Al-O solid solution, and a cobalt-rich Li-Co-O solid solution is formed on the surface of the lithium nickel-based oxide particles through step (C), the side reaction between the positive electrode active material and the electrolyte solution may be effectively suppressed.

The aluminum precursor may be at least one selected from Al(OH)₃, Al₂O₃, AlF₃, AlBr₃, AlPO₄, AlCl₃, Al(NO)₃, Al(NO₃)₃·9H₂O, Al₂(SO₄)₃·H₂O, Al(H₂PO₄)₃, C₂H₅O₄Al, Al(SO)₄, NaAlO₂, Al₂CoO₄, LaAlO₃, and MgAl₂O.

Also, the cobalt precursor may include at least one selected from Co(OH)₂ and Co₃O₄.

The first coating layer may be continuously coated on the lithium nickel-based oxide with a uniform thickness, or may be distributed on a portion of the surface of the lithium nickel-based oxide. Preferably, the first coating layer may be continuously coated on the lithium nickel-based oxide.

The first coating layer may include Al(OH)₃, Al₂O₃, or Co₃O₄, and may specifically include Al₂O₃ and Co₃O₄.

The lithium nickel-based oxide particles as the primary sintered product, the aluminum precursor, and the cobalt precursor may be mixed in a ratio of 100:0.1 mol% to 0.3 mol%:2.0 mol% to 3.0 mol%.

In a case in which the lithium nickel-based oxide particles and the aluminum/cobalt precursors are mixed within the above range, the aluminum/cobalt-containing coating layer capable of achieving excellent high-temperature life characteristics may be formed on the lithium nickel-based oxide while an amount of byproduct of unreacted transition metal after sintering may be reduced, and, as a result, the reduction in the capacity of the positive electrode active material may be prevented by suppressing the separation of positive electrode active material particles (positive electrode active material coalescence phenomenon). That is, if the aluminum precursor is used in an amount of 0.1 mol% or more and the cobalt precursor is used in an amount of 2.0 mol% or more, degradation of the high-temperature life characteristics may be prevented by forming the first coating layer which is uniformly and continuously coated on the lithium nickel-based oxide. Also, if the aluminum precursor is used in an amount of 0.3 mol% or less and the cobalt precursor is used in an amount of 3.0 mol% or less, a decrease in rolling density or an increase in initial resistance may be prevented by preventing an unreacted aluminum component from remaining or increasing in the first coating layer.

The secondary sintering may be performed at a temperature of 600°C to 790°C, and may specifically be performed at a temperature of 700°C to 790°C.

Since the secondary sintering is performed within the above temperature range, the formed primary sintered product is recrystallized to form a lithium nickel-based oxide having better structural stability and an appropriate crystal size and the first coating layer continuously coated with a uniform thickness on the lithium nickel-based oxide may be formed at the same time.

Particularly, since the aluminum precursor has a low melting point, the first coating layer with a uniform thickness may be formed as aluminum is uniformly diffused on the surface of the lithium nickel-based oxide particle during sintering in the above sintering temperature range. Accordingly, the reduction in the capacity of the positive electrode active material may be suppressed.

The secondary sintering may be performed in an oxygen atmosphere. For example, the secondary sintering may be performed in an oxygen atmosphere containing 90 vol% or more, specifically, 95 vol% or more of oxygen.

The secondary sintering may be performed for 10 hours to 15 hours, and may specifically be performed for 11 hours to 13 hours. In this case, the secondary sintering is performed while reducing an oxygen concentration according to the sintering time. In a case in which the secondary sintering time is within the above range, the sintering may be performed well without deviation for each sintering position, i.e., the sintering may be performed uniformly.

### (D) Forming Second Coating Layer

The method of preparing a positive electrode active material of the present disclosure may include the step of mixing the lithium nickel-based oxide having the first coating layer formed thereon, which has been prepared in step (C), with a titanium precursor, and performing tertiary sintering to form a second coating layer containing coating element M2 (M2 is Ti) on a surface of the first coating layer (step (D)).

The second coating layer containing titanium dioxide may be discontinuously distributed on the surface of the first coating layer through the tertiary sintering. Specifically, the first coating layer containing a Li-Al-Ti-O solid solution as well as a Li-Ti-O solid solution may be discontinuously distributed on the surface of the lithium nickel-based oxide particle through the tertiary sintering, and, as a result, the thermal stability and surface durability may be enhanced and a decrease in charge capacity may be suppressed by controlling the Ni fraction on the surface.

The titanium precursor may include at least one selected from titanium dioxide (TiO₂), titanium butoxide, titanium isopropoxide, titanium chloride, titanium tetraisopropoxide, and tetra-n-butyl orthotitanate, and titanium dioxide may specifically be used.

Also, the lithium nickel-based oxide particles having the first coating layer formed thereon and the titanium precursor may be mixed in a ratio of 100:0.1 mol% to 100:0.3 mol%, and may specifically be mixed in a ratio of 100:0.1 mol% to 100:0.2 mol%.

In a case in which the lithium nickel-based oxide particles having the first coating layer formed thereon and the titanium precursor are mixed within the above range, a rapid increase in crystal size of the titanium dioxide (TiO₂) may be suppressed, and occurrence of disadvantages, such as an increase in surface resistance, due to remaining of unreacted titanium as a byproduct may be prevented.

Furthermore, the tertiary sintering may be performed at a temperature of 600°C to 700°C, and may specifically be performed at a temperature of 650°C to 700°C.

In a case in which the tertiary sintering temperature satisfies the above range, oxygen desorption may be suppressed by forming a titanium-containing coating layer having an appropriate concentration on the surface of the positive electrode active material including the first coating layer, and, as a result, the thermal stability of the positive electrode active material may be enhanced. That is, in a case in which the tertiary sintering temperature is 700°C or less, since the oxygen desorption from the surface of the positive electrode active material is suppressed by preventing coating of the second coating layer on the entire surface of the positive electrode active material and controlling the second coating layer to be discontinuously distributed on the surface of the first coating layer, the thermal stability of the positive electrode active material may be enhanced. Also, a reduction in capacity of the positive electrode may be prevented and an increase in resistance may be suppressed by preventing titanium doping and diffusion into the core portion.

The tertiary sintering may be performed for 3 hours to 10 hours, and may specifically be performed for 3 hours to 8 hours, more specifically, 3 hours to 6 hours. In a case in which the tertiary sintering time is within the above range, a second coating layer distribution effect may be obtained without deviation for each sintering position.

A conventional single-particle lithium nickel-based oxide particle may achieve a high-density improvement because it is prepared by sintering at a higher temperature than a typical polycrystalline lithium nickel-based oxide. However, since the single-particle lithium nickel-based oxide contains a high concentration of Ni, thermal stability is low and oxygen desorption and a side reaction between an electrolyte solution and a surface of a positive electrode material may occur to cause an exothermic reaction. Accordingly, in order to solve such problems in the present disclosure, since the first coating layer containing Al and Co is formed on the single-particle lithium nickel-based oxide particle and the second coating layer containing a specific concentration of the coating element as a heterogeneous element whose binding energy with oxygen is about 0.6 eV higher than that of Ni³⁺, i.e., Ti is additionally formed on the first coating layer, the oxygen desorption may be suppressed to improve the thermal safety of the positive electrode active material and the side reaction between the electrolyte and the surface of the positive electrode material may be suppressed. Thus, a battery using the positive electrode active material may achieve high-temperature storage characteristics and resistance suppression effect.

### [Positive Electrode]

A positive electrode according to the present disclosure may include a positive electrode collector; and a positive electrode material mixture layer disposed on at least one surface of the positive electrode collector. In this case, the positive electrode material mixture layer may include the above-described positive electrode active material.

The positive electrode collector may typically have a thickness of 3 µm to 500 µm.

Microscopic irregularities may be formed on the surface of the positive electrode collector to improve adhesion of the positive electrode active material. For example, the positive electrode collector may be used in various shapes such as that of a film, a sheet, a foil, a net, a porous body, a foam body, a non-woven fabric body, and the like.

The positive electrode material mixture layer is disposed on at least one surface of the positive electrode collector. Specifically, the positive electrode material mixture layer may be disposed on one surface or both surfaces of the positive electrode collector.

The positive electrode active material may be included in an amount of 80 wt% to 99 wt% in the positive electrode material mixture layer in consideration of exhibiting sufficient capacity of the positive electrode active material.

The positive electrode material mixture layer may further include a conductive agent and/or a binder in addition to the above-described positive electrode active material.

Specifically, the conductive agent is not particularly limited as long as it has conductivity without causing chemical changes in the battery, and, for example, carbon black such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The conductive agent is typically added in an amount of 1 wt% to 30 wt% based on a total weight of a solid content in the positive electrode material mixture layer.

Also, the binder improves adhesion between the positive electrode active material particles and adhesion between the positive electrode active material and the positive electrode collector, wherein specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may be added in an amount of 1 wt% to 30 wt% based on the total weight of the solid content in the positive electrode material mixture layer.

Furthermore, the positive electrode of the present disclosure as described above may be prepared according to a method of preparing a positive electrode which is known in the art. For example, the positive electrode may be prepared by coating a positive electrode collector with a positive electrode slurry including the positive electrode active material, the binder and/or the conductive agent, and a solvent and then drying and rolling the coated positive electrode collector. Also, the positive electrode may be prepared by preparing a film by mixing the positive electrode active material with optionally the binder and the conductive agent to prepare a film and then laminating the film on the positive electrode collector.

The solvent, for example, may include at least one selected from the distilled water, N-methyl pyrrolidone, ethanol, methanol and isopropyl alcohol, and may preferably include N-methyl pyrrolidone, in terms of facilitating dispersion of the positive electrode active material, the binder and/or the conductive agent.

### [Lithium Secondary Battery]

Also, the present disclosure may include a lithium secondary battery including the positive electrode.

Specifically, the lithium secondary battery may provide a lithium secondary battery including the positive electrode of the present disclosure, a negative electrode, a separator disposed between the positive electrode and the negative electrode, and a non-aqueous electrolyte.

In this case, since the positive electrode has been described above, a description thereof will be omitted and other components will be described below.

### (1) Negative Electrode

Next, a negative electrode will be described.

The negative electrode may include a negative electrode active material.

Various negative electrode active materials used in the art, for example, a carbon-based negative electrode active material, a silicon-based negative electrode active material, or a mixture thereof may be used as the negative electrode active material.

According to an embodiment, the negative electrode active material may include a carbon-based negative electrode active material, and, as the carbon-based negative electrode active material, various carbon-based negative electrode active materials used in the art, for example, graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

Preferably, as the negative electrode active material, at least one carbon-based negative electrode active material of natural graphite and artificial graphite may be used, and natural graphite and artificial graphite may be used together to suppress exfoliation of the active material by increasing adhesion to a current collector.

According to another embodiment, the negative electrode active material may be used by including a silicon-based negative electrode active material together with the carbon-based negative electrode active material.

The silicon-based negative electrode active material, for example, may include at least one selected from the metal silicon (Si), silicon oxide (SiOₓ, where 0<x<2), silicon carbide (SiC), and a Si-Y alloy (where Y is an element selected from alkali metal, alkaline earth metal, a Group 13 element, a Group 14 element, transition metal, a rare earth element, and a combination thereof, and is not Si). The element Y may be selected from the group consisting of Mg, Ca, Sr, barium (Ba), radium (Ra), scandium (Sc), yttrium (Y), Ti, Zr, hafnium (Hf), rutherfordium (Rf), vanadium (V), niobium (Nb), tantalum (Ta), dubnium (Db), chromium (Cr), molybdenum (Mo), W, seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), tin (Sn), indium (In), Ti, germanium (Ge), phosphorus (P), arsenic (As), antimony (Sb), bismuth (Bi), sulfur (S), selenium (Se), tellurium (Te), polonium (Po), and a combination thereof.

The negative electrode of the present disclosure may include at least one selected from the carbon-based active material and the silicon-based active material.

Specifically, the negative electrode of the present disclosure may include the carbon-based active material and the silicon-based active material.

In this case, a weight ratio of the silicon-based active material to the carbon-based active material may be in a range of 1:99 to 30:70, specifically, 3:97 to 15:85. In a case in which the mixing ratio of the silicon-based active material to the carbon-based active material satisfies the above range, since volume expansion of the silicon-based active material is suppressed while capacity characteristics are improved, excellent cycle performance may be ensured.

The negative electrode may include a negative electrode collector; and a negative electrode material mixture layer disposed on at least one surface of the negative electrode collector. In this case, the negative electrode active material may be included in the negative electrode material mixture layer.

The negative electrode collector is not particularly limited as long as it has high conductivity without causing chemical changes in the battery. Specifically, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode collector.

The negative electrode collector may typically have a thickness of 3 µm to 500 µm.

Microscopic irregularities may be formed on the surface of the negative electrode collector to improve adhesion of the negative electrode active material. For example, the negative electrode collector may be used in various shapes such as that of a film, a sheet, a foil, a net, a porous body, a foam body, a non-woven fabric body, and the like.

The negative electrode material mixture layer is disposed on at least one surface of the negative electrode collector. Specifically, the negative electrode material mixture layer may be disposed on one surface or both surfaces of the negative electrode collector.

The negative electrode active material may be included in an amount of 60 wt% to 99 wt% in the negative electrode material mixture layer in terms of sufficiently exhibiting the capacity in the secondary battery while minimizing an effect of volume expansion/contraction on the battery.

The negative electrode material mixture layer may have a thickness of 5 µm to 500 µm, preferably, 5 µm to 100 µm.

The negative electrode material mixture layer may further include a conductive agent and/or a binder in addition to the silicon-based active material.

Next, the conductive agent is a component for further improving conductivity of the negative electrode active material, wherein a conductive material having conductivity without causing chemical changes in the battery, such as: carbon black such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt% in the negative electrode material mixture layer, and when the amount of the conductive agent is within the above range, it is desirable in that an excellent conductive network may be formed while an increase in resistance due to the binder is mitigated.

The binder is a component that assists in binding between the conductive agent, the active material, and the current collector, wherein the binder may include a fluorine resin-based binder including polyvinylidene fluoride or polytetrafluoroethylene; a rubber-based binder including a styrene butadiene rubber, an acrylonitrile-butadiene rubber, or a styrene-isoprene rubber; a cellulose-based binder including carboxymethylcellulose, starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may be included in an amount of 1 wt% to 30 wt% in the negative electrode material mixture layer, and when the amount of the binder is within the above range, the binder may minimize the problem of volume expansion of the active material by binding the negative electrode active material better, dispersion of the binder during preparation of a slurry for forming a negative electrode active material layer may be facilitated at the same time, and coatability and phase stability of the slurry may be improved.

The negative electrode may be prepared by coating the negative electrode collector with a negative electrode slurry including the negative electrode active material as well as optionally the binder, the conductive agent, and a solvent for forming a negative electrode slurry and then drying and rolling the coated negative electrode collector. Also, the negative electrode may be prepared by preparing a film by mixing the negative electrode active material with optionally the binder and the conductive agent to prepare a film and then laminating the film on the negative electrode collector.

The solvent for forming a negative electrode slurry, for example, may include at least one selected from distilled water, N-methyl pyrrolidone, ethanol, methanol and isopropyl alcohol, and may preferably include distilled water, in terms of facilitating dispersion of the negative electrode active material, the binder and/or the conductive agent.

### (2) Non-aqueous Electrolyte

As the non-aqueous electrolyte used in the present disclosure, various non-aqueous electrolytes which may be used in the lithium secondary battery, for example, an organic liquid non-aqueous electrolyte, an inorganic liquid non-aqueous electrolyte, a solid polymer non-aqueous electrolyte, a gel-type polymer non-aqueous electrolyte, a solid inorganic non-aqueous electrolyte, or a molten-type inorganic non-aqueous electrolyte may be used, but types thereof are not particularly limited.

Specifically, the non-aqueous electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the non-aqueous electrolyte may have appropriate conductivity and viscosity, excellent performance of the non-aqueous electrolyte may be obtained and lithium ions may effectively move.

In order to suppress battery expansion at high temperatures, improve life characteristics of the battery, suppress the reduction in battery capacity, and improve discharge capacity of the battery, an additive may be further are included in the non-aqueous electrolyte in addition to the above non-aqueous electrolyte components. Examples of the additive may include at least one selected from the a cyclic carbonate-based compound such as vinylene carbonate (VC) and vinylethylene carbonate (VEC); a halogen-substituted carbonate-based compound such as fluoroethylene carbonate (FEC); at least one sultone-based compound selected from 1,3-propane sultone (PS), 1,4-butane sultone, ethene sultone, 1,3-propene sultone (PRS), 1,4-butene sultone, and 1-methyl-1,3-propene sultone; a sulfate-based compound such as ethylene sulfate, trimethylene sulfate, and methyltrimethylene sulfate; a phosphate-based or phosphite-based compound; a borate-based compound such as tetraphenylborate, oxalyldifluoroborate (LiODFB), or lithium bisoxalatoborate; a benzene-based compound; an amine-based compound; a silane-based compound such as tetravinylsilane; and a lithium salt-based compound such as LiPO₂F₂ or LiBF₄.

Two or more compounds may be used together as the additive, and in order to prevent a side reaction of the battery, the additive may be included in an amount of 0.01 wt% to 20 wt%, specifically, 0.05 wt% to 10 wt% based on a total weight of the non-aqueous electrolyte.

### (3) Separator

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for a non-aqueous electrolyte as well as low resistance to the transfer of non-aqueous electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

A shape of the lithium secondary battery according to the present disclosure as described above is not particularly limited, but a cylindrical type using a can, a prismatic type, a pouch type, or a coin type may be used.

Also, the lithium secondary battery according to the present disclosure may not only be used in a battery cell that is used as a power source of a small device such as mobile phones, notebook computers, and digital cameras, but may also be usefully used as a unit cell in a medium and large sized battery module including a plurality of battery cells such as a hybrid electric vehicle (HEV).

Thus, according to another embodiment of the present disclosure, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, the present disclosure will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present disclosure to those skilled in the art.

### Examples

### [Positive Electrode Active Material Preparation]

### Example 1.

### (Primary Sintering)

A transition metal precursor (Ni_{0.95}Co_{0.03}Mn_{0.02}(OH)₂) having an average particle diameter (D₅₀) of 5.6 µm and a specific surface area (BET) of 2.26 m²/g and a lithium-containing raw material (LiOH·H₂O) were mixed such that a molar ratio of Li:transition metals (Ni+Co+Mn) was 1.03:1, and then subjected to primary sintering at 850°C for 12 hours in an atmosphere containing 90 vol% or more of oxygen to prepare a lithium nickel-based oxide (Li(Ni_{0.95}Co_{0.03}Mn_{0.02})O₂) having an average particle diameter (D₅₀) of 5.6 µm.

### (Secondary Sintering)

Subsequently, the lithium nickel-based oxide as a primary sintered product, Al₂O₃, and Co₃O₄ were mixed in a ratio of 100:0.2:2.0 mol%, and subjected to secondary sintering at 700°C for 10 hours to prepare a secondary sintered product (Li(Ni_{0.928}Mn_{0.02}Co_{0.05}Al_{0.002})O₂) in which a first coating layer containing Al₂O₃ and Co₃O₄ was continuously coated on the lithium nickel-based oxide.

### (Tertiary Sintering)

Then, the secondary sintered product and titanium dioxide were mixed in a ratio of 100:0.12 mol% and subjected to tertiary sintering at 600°C for 5 hours to prepare a positive electrode active material in which a second coating layer was discontinuously distributed on a surface of the first coating layer. A surface of the above-prepared positive electrode active material was observed through a scanning electron microscope (SEM), and the results thereof are illustrated in FIGS. 1 and 2.

The obtained positive electrode active material had an average particle diameter (D₅₀) of 5.6 µm and a specific surface area (BET) of 0.49 m²/g, a total amount of the first coating layer and the second coating layer was 2.4 wt%, a weight ratio of the first coating layer to the second coating layer was 1:0.04, an average particle diameter (D₅₀) of the titanium dioxide (TiO₂) included in the second coating layer was 50 nm, and a titanium dioxide (TiO₂) content was 1,000 ppm based on a total amount of the positive electrode active material.

### Example 2.

### (Primary Sintering)

A transition metal precursor (Ni_{0.95}C_{0.03}Mn_{0.02}(OH)₂) having an average particle diameter (D₅₀) of 5.0 µm and a specific surface area (BET) of 3.2 m²/g and a lithium-containing raw material (LiOH·H₂O) were mixed such that a molar ratio of Li:transition metals (Ni+Co+Mn) was 1.03:1, and then subjected to primary sintering at 830°C for 12 hours in an atmosphere containing 90 vol% or more of oxygen to prepare a lithium nickel-based oxide (Li(Ni_{0.95}Co_{0.03}Mn_{0.02})O₂) having an average particle diameter (D₅₀) of 5.0 µm.

### (Secondary Sintering)

Subsequently, the lithium nickel-based oxide as a primary sintered product, Al₂O₃, and Co₃O₄ were mixed in a ratio of 100:0.2:2.0 mol%, and subjected to secondary sintering at 700°C for 10 hours to prepare a secondary sintered product (Li(Ni_{0.928}Mn_{0.02}Co_{0.05}Al_{0.002})O₂) in which a first coating layer containing Al₂O₃ and Co₃O₄ was continuously coated on the lithium nickel-based oxide.

### (Tertiary Sintering)

Subsequently, the secondary sintered product and titanium dioxide were mixed in a ratio of 100:0.24 mol% and subjected to tertiary sintering at 600°C for 5 hours to prepare a positive electrode active material in which a second coating layer was discontinuously distributed on a surface of the first coating layer.

The obtained positive electrode active material had an average particle diameter (D₅₀) of 5.8 µm and a specific surface area (BET) of 0.41 m²/g, a total amount of the first coating layer and the second coating layer was 2.5 wt%, a weight ratio of the first coating layer to the second coating layer was 1:0.09, an average particle diameter (D₅₀) of the titanium dioxide (TiO₂) included in the second coating layer was 60 nm, and a titanium dioxide (TiO₂) content was 2,000 ppm based on a total amount of the positive electrode active material.

### Example 3.

### (Tertiary Sintering)

The secondary sintered product prepared in Example 2 and titanium dioxide were mixed in a ratio of 100:0.24 mol% and subjected to tertiary sintering at 700°C for 5 hours to prepare a positive electrode active material in which a second coating layer was discontinuously distributed on a surface of the first coating layer.

The obtained positive electrode active material had an average particle diameter (D₅₀) of 5.8 µm and a specific surface area (BET) of 0.40 m²/g, a total amount of the first coating layer and the second coating layer was 2.5 wt%, a weight ratio of the first coating layer to the second coating layer was 1:0.10, an average particle diameter (D₅₀) of the titanium dioxide (TiO₂) included in the second coating layer was 60 nm, and a titanium dioxide (TiO₂) content was 2,000 ppm based on a total amount of the positive electrode active material.

### [Secondary Battery Preparation]

### Example 4.

### (Positive Electrode Preparation)

The positive electrode active material prepared in Example 1, a conductive agent (carbon black), and a binder (polyvinylidene fluoride) were mixed in a NMP solvent in a weight ratio of 97.5:1.15:1.35 to prepare a positive electrode slurry composition. An Al current collector having a thickness of 12 µm was coated with the positive electrode slurry composition, dried, and then rolled to prepare a positive electrode.

### (Secondary Battery Preparation)

Next, a negative electrode active material (natural graphite), a conductive agent (carbon black), and a binder (SBR+CMC) were mixed in water in a weight ratio of 95:1.5:3.5 to prepare a negative electrode slurry composition. A copper current collector was coated with the negative electrode slurry composition, dried, and then rolled to prepare a negative electrode.

A lithium secondary battery was prepared by stacking the above-prepared positive electrode and negative electrode together with a porous polyethylene separator, putting the stack in a battery case, and injecting a non-aqueous electrolyte solution (1 M LiPF₆, ethylene carbonate (EC):dimethyl carbonate (DMC):ethyl methyl carbonate (EMC) in a volume ratio of 3:4:3).

### Example 5.

A positive electrode and a lithium secondary battery including the same were prepared in the same manner as in Example 4 except that the positive electrode active material prepared in Example 2 was used instead of the positive electrode active material prepared in Example 1.

### Example 6.

A positive electrode and a lithium secondary battery including the same were prepared in the same manner as in Example 4 except that the positive electrode active material prepared in Example 3 was used instead of the positive electrode active material prepared in Example 1.

### Comparative Example 1.

### (Positive Electrode Active Material Preparation)

### (Primary Sintering)

A transition metal precursor (Ni_{0.95}Co_{0.03}Mn_{0.02}(OH)₂) having an average particle diameter (D₅₀) of 5.6 µm and a lithium-containing raw material (LiOH·H₂O) were mixed such that a molar ratio of Li:transition metals (Ni+Co+Mn) was 1.03:1, and then subjected to primary sintering at 850°C for 12 hours in an atmosphere containing 90 vol% or more of oxygen to prepare a lithium nickel-based oxide (Li(Ni_{0.95}Co_{0.03}Mn_{0.02})O₂, average particle diameter (D₅₀): 5.6 µm, specific surface area (BET): 2.26 m²/g).

### (Secondary Sintering)

Subsequently, the lithium nickel-based oxide particles as a primary sintered product, Al₂O₃, and Co₃O₄ were mixed in a ratio of 100:0.2:2.0 mol%, and subjected to secondary sintering at 700°C for 10 hours to prepare a positive electrode active material (Li(Ni_{0.928}Mn_{0.02}Co_{0.05}Al_{0.002})O₂) in which a first coating layer containing Al₂O₃ and Co₃O₄ was continuously coated on the lithium nickel-based oxide.

### (Positive Electrode Preparation)

The above-prepared positive electrode active material, a conductive agent (carbon black), and a binder (polyvinylidene fluoride) were mixed in a NMP solvent in a weight ratio of 97.5:1.15:1.35 to prepare a positive electrode slurry composition. An Al current collector having a thickness of 12 µm was coated with the positive electrode slurry composition, dried, and then rolled to prepare a positive electrode.

### (Secondary Battery Preparation)

A lithium secondary battery was prepared in the same manner as in Example 4 except that the above-prepared positive electrode was used.

### Comparative Example 2.

### (Positive Electrode Active Material Preparation)

### (Primary Sintering)

A transition metal precursor (Ni_{0.95}Co_{0.03}Mn_{0.02}(OH)₂) having an average particle diameter (D₅₀) of 5.0 µm and a lithium-containing raw material (LiOH·H₂O) were mixed such that a molar ratio of Li:transition metals (Ni+Co+Mn) was 1.03:1, and then subjected to primary sintering at 830°C for 12 hours in an atmosphere containing 90 vol% or more of oxygen to prepare a lithium nickel-based oxide (Li(Ni_{0.95}Co_{0.03}Mn_{0.02})O₂, average particle diameter (D₅₀): 5.0 µm, specific surface area (BET): 3.2 m²/g).

### (Secondary Sintering)

Subsequently, the lithium nickel-based oxide as a primary sintered product, Al₂O₃, and Co₃O₄ were mixed in a ratio of 100:0.2:2.0 mol%, and subjected to secondary sintering at 700°C for 5 hours to prepare a positive electrode active material (Li(Ni_{0.928}Mn_{0.02}Co_{0.05}Al_{0.002})O₂) in which a first coating layer containing Al₂O₃ and Co₃O₄ was continuously coated on the lithium nickel-based oxide.

### (Positive Electrode Preparation)

The above-prepared positive electrode active material, a conductive agent (carbon black), and a binder (polyvinylidene fluoride) were mixed in a NMP solvent in a weight ratio of 97.5:1.15:1.35 to prepare a positive electrode slurry composition. An Al current collector having a thickness of 12 µm was coated with the positive electrode slurry composition, dried, and then rolled to prepare a positive electrode.

### (Secondary Battery Preparation)

A lithium secondary battery was prepared in the same manner as in Example 4 except that the above-prepared positive electrode was used.

### Experimental Examples

### Experimental Example 1.

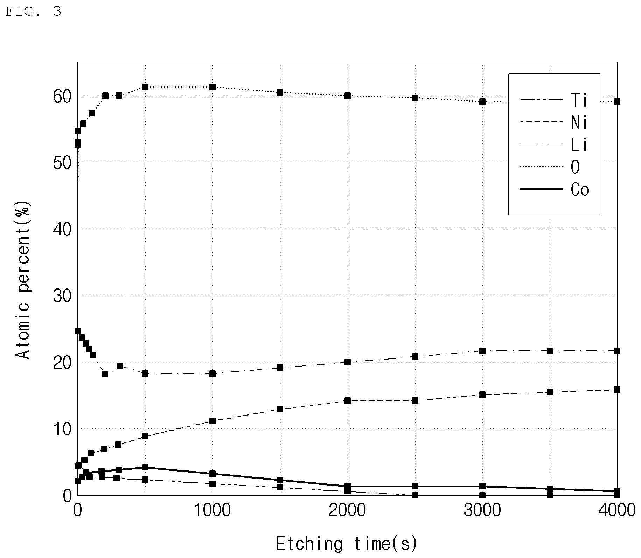

X-ray photoelectron spectroscopy (XPS) was performed on the second coating layers of the positive electrode active materials prepared in Examples 1 to 3, and results of calculating an average titanium content included in the second coating layer relative to contents of Ni, Co, Li, and oxygen (O) are included in the lithium nickel-based oxide and a titanium concentration reduction ratio are illustrated in FIGS. 3 to 5, respectively.

The XPS photoelectron spectroscopy (XPS) analysis was performed under XPS (Thermo Fisher Scientific Inc., X-ray source: Al-Kα (1486.6 eV); accelerating voltage: 1 kV, 300 W, energy resolution: about 1.0 eV, minimum analysis area: 400 micro, sputter rate: 0.13 nm/min) conditions.

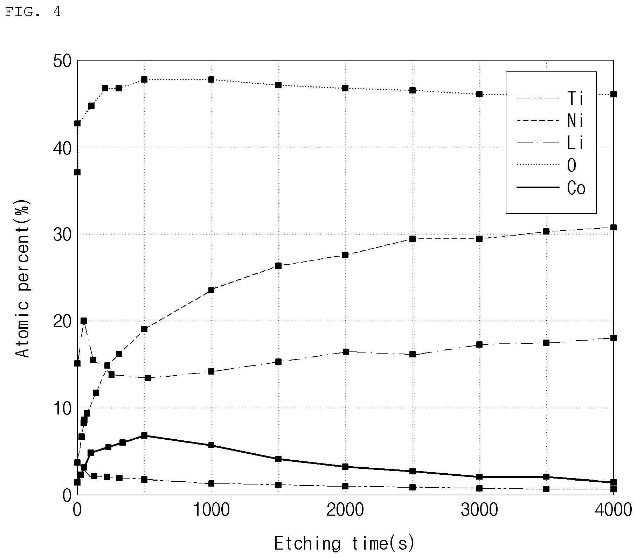

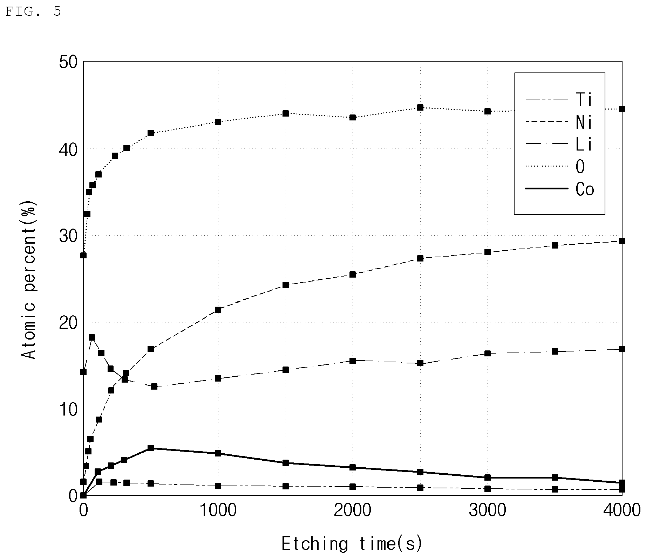

FIG. 3 is a graph illustrating XPS results for the second coating layer of the positive electrode active material prepared in Example 1 of the present disclosure, FIG. 4 is a graph illustrating XPS results for the second coating layer of the positive electrode active material prepared in Example 2, and FIG. 5 is a graph illustrating XPS results for the second coating layer of the positive electrode active material prepared in Example 3.

Specifically, referring to FIG. 3, the positive electrode active material prepared in Example 1 had a titanium content in an outermost portion of the second coating layer relative to a total amount of Ni, Co, Li, and oxygen (O) are included in the lithium nickel-based oxide particle of about 3.0 atomic%, and an average titanium content are included in the second coating layer was about 1.3 atomic%, and, since a titanium concentration gradually decreased toward an interface between the first coating layer and the second coating layer, it may be understood that the titanium concentration at the interface between the first coating layer and the second coating layer was decreased by 50% or more in comparison to a titanium concentration in the second coating layer.

Also, referring to FIG. 4, the positive electrode active material prepared in Example 2 had a titanium content in an outermost portion of the second coating layer relative to a total amount of Ni, Co, Li, and oxygen (O) are included in the lithium nickel-based oxide particle of about 3.2 atomic%, and an average titanium content are included in the second coating layer was about 2.6 atomic%, and it may be understood that a titanium concentration at an interface between the first coating layer and the second coating layer was decreased by 50% or more in comparison to a titanium concentration in the second coating layer. That is, with respect to the positive electrode active material of Example 2 having a relatively high titanium precursor content, it may be understood that the titanium content in the second coating layer was somewhat increased in comparison to the positive electrode active material of Example 1.

Furthermore, referring to FIG. 5, the positive electrode active material prepared in Example 3 had a titanium content in an outermost portion of the second coating layer relative to a total amount of Ni, Co, Li, and oxygen (O) are included in the lithium nickel-based oxide particle of about 2.8 atomic%, and an average titanium content are included in the second coating layer was about 2.6 atomic%, but it may be understood that a titanium concentration at an interface between the first coating layer and the second coating layer was decreased by about 40% in comparison to a titanium concentration in the second coating layer. That is, with respect to the positive electrode active material of Example 3 in which the tertiary sintering was performed at 700°C, it may be understood that a ratio of the titanium content included in the second coating layer to the titanium content in the outermost portion of the second coating layer was somewhat increased in comparison to the positive electrode active material of Example 2 in which the tertiary sintering was performed at 600°C.

### Experimental Example 2. Heat Generation Evaluation (1)

Heat flow according to temperature of the positive electrodes prepared in Examples 4 to 6 and the positive electrodes prepared in Comparative Examples 1 and 2 was measured using a differential scanning calorimeter (manufactured by METTLER TOLEDO, model name: DSC3).

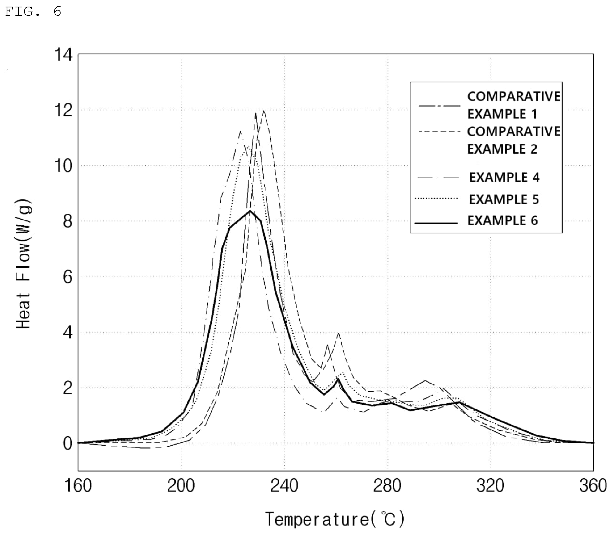

Specifically, each of the lithium secondary batteries prepared in Examples 4 to 6 and the lithium secondary batteries prepared in Comparative Examples 1 and 2 was charged at a constant current of 0.1 C to 4.25 V at 25°C, and the lithium secondary battery was then disassembled to separate the positive electrode. The separated positive electrode was washed with dimethyl acetate, and then immersed in 20 µL of the electrolyte solution (1 M LiPF₆, EC:DMC:EMC = 3:4:3 volume ratio), and DSC analysis of the positive electrode active material was performed. A temperature range for the DSC analysis was 100°C to 400°C, and a heating rate was 10°C/min. For each positive electrode, DSC measurements were performed three times or more to calculate an average value. Measurement results are presented in Table 1 and FIG. 6 below.

**[Table 1]**

| | DSC exothermic main peak intensity (°C) | DSC exothermic main peak reduction intensity (%) |
|---|---|---|
| Example 4 | 11.0 | - 8 |
| Example 5 | 10.7 | -10 |
| Example 6 | 8.4 | -29 |
| Comparative Example 1 | 12.0 | - |
| Comparative Example 2 | 11.9 | - |

Referring to Table 1 and FIG. 6, it may be understood that the positive electrodes prepared in Examples 4 to 6 exhibited DSC exothermic main peak intensities of 11 W/g or less, but the positive electrodes prepared in Comparative Examples 1 and 2 exhibited DSC exothermic main peak intensities in a range of greater than 11 W/g.

That is, it may be understood that maximum heat flows of the positive electrodes prepared in Examples 4 to 6 of the present disclosure were decreased by about 7% or more in comparison to those of the positive electrodes prepared in Comparative Examples 1 and 2. Referring to these results, it may be understood that the positive electrode active material of the present disclosure had excellent thermal stability even when internal temperature of the battery was increased due to overcharge or the like by securing low heat flow.

### Experimental Example 3. Resistance Evaluation

Charging of each of the lithium secondary battery of Example 4 and the lithium secondary battery of Comparative Example 1 at a constant current of 0.1 C to 4.25 V at 25°C and discharging of each lithium secondary battery at a constant current of 200 mAh/g to 2.5 V were set as one cycle and 3 cycles of the charging and discharging were performed.

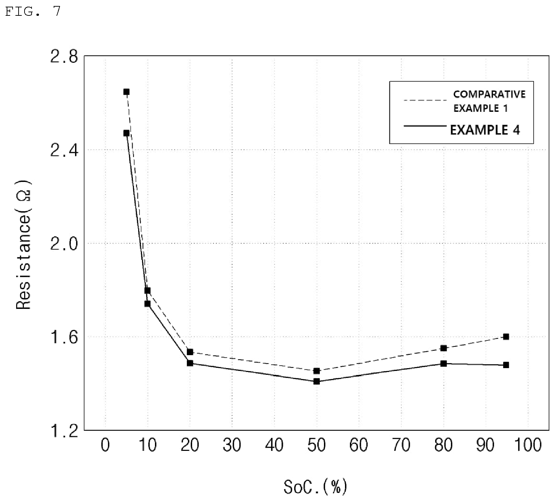

Subsequently, the lithium secondary battery was charged at a constant current (CC) of 0.33 C to 4.20 V under constant current-constant voltage (CC-CV) charging conditions at 25°C, and then pulse discharged at a 2.5 C rate under conditions of an SOC of 95%, 80%, 50%, 20%, or 10% to measure a voltage drop for 10 seconds to obtain an initial resistance value, and the results thereof are illustrated in FIG. 7.

Referring to FIG. 7, with respect to the lithium secondary battery of Example 4 of the present disclosure, it may be confirmed that initial resistance was relatively reduced in comparison to that of the lithium secondary battery of Comparative Example 1.

## Claims

1. A positive electrode active material comprising:
a lithium nickel-based oxide having a content of nickel among total metallic elements excluding lithium of 70 mol% or more; a first coating layer formed on the lithium nickel-based oxide; and a second coating layer formed on the first coating layer,
wherein the first coating layer comprises coating element M1 (the M1 is at least one selected from the group consisting of nickel (Ni), cobalt (Co), and aluminum (Al)),
the second coating layer comprises coating element M2 (the M2 is titanium (Ti)), and
a content of titanium included in the second coating layer, which is measured by X-ray photoelectron spectroscopy (XPS), is in a range of 0.7 atomic% to 3.3 atomic% based on a total content of Ni, Co, lithium (Li), and oxygen (O) are included in the lithium nickel-based oxide which is measured by the XPS.

2. The positive electrode active material of claim 1, wherein the lithium nickel-based oxide is represented by [Formula 1]:
[Formula 1] LiₐNi_{b}Co_{c}M'_{d}M"ₑO₂
wherein, in [Formula 1],
M' is manganese (Mn), aluminum (Al), or a combination thereof,
M" is at least one selected from the group consisting of Al, zirconium (Zr), tungsten (W), titanium (Ti), magnesium (Mg), calcium (Ca), and strontium (Sr), and 0.8≤a≤1.2, 0.7≤b<1.0, 0<c<0.3, 0<d<0.3, and 0≤e≤0.2.

3. The positive electrode active material of claim 1, wherein the lithium nickel-based oxide is in a form of a single particle composed of one primary particle or in a form of a pseudo-single particle which is an aggregate of 30 or less primary particles.

4. The positive electrode active material of claim 1, wherein an average particle diameter (D₅₀) of the lithium nickel-based oxide is in a range of 1.0 µm to 8.0 µm.

5. The positive electrode active material of claim 1, wherein the first coating layer is continuously coated on a surface of the lithium nickel-based oxide.

6. The positive electrode active material of claim 1, wherein the first coating layer comprises Al₂O₃ and Co₃O₄.

7. The positive electrode active material of claim 1, wherein the second coating layer is discontinuously distributed on a surface of the first coating layer.

8. The positive electrode active material of claim 1, wherein the second coating layer comprises titanium dioxide (TiO₂).

9. The positive electrode active material of claim 8, wherein an average particle diameter (D₅₀) of the titanium dioxide (TiO₂) is in a range of 20 nm to 150 nm.

10. The positive electrode active material of claim 8, wherein the titanium dioxide (TiO₂) is are included in an amount of 1,000 ppm to 2,000 ppm based on a total amount of the positive electrode active material.

11. The positive electrode active material of claim 1, wherein the first coating layer and the second coating layer are included in an amount of 2.3 wt% to 2.5 wt% based on a total amount of the positive electrode active material.

12. The positive electrode active material of claim 1, wherein the first coating layer and the second coating layer are included in a weight ratio of 1:0.04 to 1:0.1.

13. The positive electrode active material of claim 1, wherein the content of the titanium are included in the second coating layer, which is measured by the XPS, is in a range of 0.7 atomic% to 3.0 atomic% based on the total content of the Ni, Co, Li, and oxygen (O) are included in the lithium nickel-based oxide which is measured by the XPS.

14. The positive electrode active material of claim 1, wherein the positive electrode active material has a maximum heat flow, which is measured by differential scanning calorimetry (DSC), of 11 W/g or less.

15. A method of preparing the positive electrode active material of claim 1, the method comprising:
preparing a transition metal precursor containing nickel (Ni), cobalt (Co), and manganese (Mn) and having a content of the nickel among total metallic elements of 70 mol% or more;
mixing the transition metal precursor with a lithium-containing raw material, and performing primary sintering to form a lithium nickel-based oxide;
mixing the lithium nickel-based oxide with an aluminum precursor and a cobalt precursor, and performing secondary sintering to form a first coating layer containing coating element M1 (the M1 is at least one selected from Ni, Co, and aluminum (Al)) on the lithium nickel-based oxide; and
mixing the lithium nickel-based oxide having the first coating layer formed thereon with a titanium precursor, and performing tertiary sintering to form a second coating layer containing coating element M2 (the M2 is titanium (Ti)) on a surface of the first coating layer.

16. The method of claim 15, wherein the transition metal precursor is represented by [Formula 2]:
[Formula 2] NiₓCo_{y}Mn_{z}M³_{q}(OH)₂
wherein, in [Formula 2],
M³ is at least one selected from the group consisting of manganese (Mn), aluminum (Al), zirconium (Zr), tungsten (W), titanium (Ti), magnesium (Mg), calcium (Ca), and strontium (Sr), and 0.7≤x≤1.0, 0<y≤0.3, 0<z<0.3, and 0≤q≤0.2.

17. The method of claim 15, wherein the primary sintering is performed at a temperature of 800°C to 890°C.

18. The method of claim 15, wherein the secondary sintering is performed at a temperature of 600°C to 790°C.

19. The method of claim 15, wherein the tertiary sintering is performed at a temperature of 600°C to 700°C.

20. The method of claim 15, wherein a mixing molar ratio of the lithium nickel-based oxide having the first coating layer formed thereon to the titanium precursor is in a range of 100:0.1 to 100:0.3.

21. A positive electrode for a lithium secondary battery, the positive electrode comprising the positive electrode active material of claim 1.

22. A lithium secondary battery comprising the positive electrode for a lithium secondary battery of claim 21.
